# EUROPÄISCHE PATENTSCHRIFT

(11) **EP 0 588 230 B1**
(45) Veröffentlichungstag und Bekanntmachung des Hinweises auf die Patenterteilung: **21.01.1998**
(21) Anmeldenummer: 93114420.8
(22) Anmeldetag: 08.09.1993
(51) Int. Cl.: B01D 29/09

(54) **Trenn- und Filtriervorrichtung zur Fest/Flüssigtrennung**
Separation and filtration device for solid-liquid separation
Dispositif de séparation et de fibration pour la séparation solide-liquide

(30) Priorität: 09.09.1992 DE 4230214; 28.04.1993 DE 9306279 U
(43) Veröffentlichungstag der Anmeldung: 23.03.1994
(73) Patentinhaber: Wilkes, Kurt, D-88400 Biberach (DE)
(72) Erfinder: Wilkes, Kurt, 88400 Biberach (DE)
(74) Vertreter: König, Beate, Dipl.-Phys. Dr.

(56) Entgegenhaltungen:
- EP-A- 0 437 860
- EP-A- 0 534 085
- DE-A- 2 403 662
- DE-C- 576 959
- FR-A- 2 114 828

## Beschreibung

Die Erfindung betrifft eine Trenn- und Filtriervorrichtung zur Fest/Flüssigtrennung, insbesondere mit Schwerkraftfilterung.

In der EP-B-0 347 445 beispielsweise ist ein Schwerkraftbandfilter zum Filtern von Feststoffpartikel enthaltenden Flüssigkeiten durch ein Filterband beschrieben, bei dem ein flüssigkeitsdurchlässiges Endlosband über Umlenkwalzen angetrieben wird und zusammen mit zwei abgedichtet angeordneten, umlaufenden Seitenscheiben einen muldenförmigen Filtrierraum bildet und Mitnehmerleisten vorgesehen sind, die das Austragen von Filterkuchen aus dem muldenförmigen Filtrierraum unterstützen. Auf dem Endlosband kann als Trägerband ein von einer Vliesrolle abgezogenens Filtervlies anliegen und mitgeführt werden. Alternativ ist das Endlosband ein poröses Filterband aus einem flexiblen, zugfesten, verschleißfesten Werkstoff, insbesondere ein Geflecht oder ein Gewebe aus Edelstahl oder kunststoffummantelten Drähten. Um das Filterband ausreichend zu führen, ist bei diesem Schwerkraftbandfilter eine Bandlaufsteuerung vorgesehen. Ein entsprechender Bandlaufregeler ist ziemlich kostspielig. Des weiteren ist das vorzugsweise aus Edelstahl hergestellte Endlosband der bekannten Filterkonstruktion mit einer aufwendigen Naht versehen, die ebenfalls kostspielig ist.

Der Erfindung liegt die Aufgabe zugrunde, eine Vorrichtung zur Fest/Flüssigtrennung, insbesondere eine Filtriervorrichtung, zu schaffen, die einerseits relativ wenig Raum benötigt und andererseits kostengünstig ist.

Diese Aufgabe ist erfindungsgemäß bei einer Trenn- und Filtriervorrichtung mit den Merkmalen des Anspruchs 1 gelöst. Vorteilhafte Weitergestaltungen der erfindungsgemäßen Trenn- und Filtriervorrichtung sind Gegenstand der Unteransprüche.

Eine erfindungsgemäße Trenn- und Filtriervorrichtung zur Fest/Flüssigtrennung, insbesondere mit Schwerkraftfilterung, umfaßt somit einen Filtrierraum, der eine über eine Zuführung zugeführte, zu trennende Fest/Flüssig-Mischung enthält. Ferner ist ein zwei Enden aufweisendes, vor- und zurücklaufendes Filterband vorgesehen, das für Flüssigkeiten permeabel und für Feststoffpartikel im wesentlichen impermeabel ist und die untere Begrenzung des Filtrierraums bildet, wobei das Filtrat unterhalb des Filterbandes abgeführt wird. Mitnehmereinrichtungen, die sich gleichzeitig mit dem Filterband bewegen, unterstützen das Austragen von Filterkuchen mittels des Filterbandes aus dem Filtrierraum, wobei eine Einrichtung für den Austrag des Filterkuchens auf einer Seite des Filtrierraums vorgesehen ist. Ferner weist die erfindungsgemäße Vorrichtung eine Reinigungsvorrichtung für das Filterband auf, die sich außerhalb des Filtrierraums und hinter der Filterkuchenaustragstelle befindet.

Die erfindungsgemäße Trenn- und Filtriervorrichtung umfaßt somit kein Endlosband, sondern ein jeweils endseitig eingespanntes Band, das vor- und zurückläuft. Bei einer vorteilhaften Ausführung der erfindungsgemäßen Vorrichtung sind die Enden des Filterbandes jeweils an einer Wickelwalze befestigt. Entsprechend wird der Filterkuchen in Austragsrichtung transportiert und im Bereich der austragsseitigen Wickelwalze vom Filterband abgestreift bzw. abgeführt. Der Austrag kann je nach Ausgestaltung der erfindungsgemäßen Trenn- und Filtriervorrichtung stets nur in einer Richtung erfolgen. Dies kann sich z.B. aus räumlichen Randbedingungen ergeben. Alternativ ist es möglich, in beiden Richtungen einen Austrag des Filterkuchens aus dem Filtrierraum vorzusehen. Dementsprechend sind dann die Mitnehmereinrichtungen für den Betrieb bzw. zur Unterstützung des Austragens von Filterkuchen in beiden Richtungen ausgelegt.

Vorteilhaft ist je eine Reinigungsvorrichtung beidseitig des Filtrierraums vorgesehen. Durch diese wird am Band noch haftender Filterkuchen von diesem entfernt. Die Reinigungsvorrichtung kann z.B. Reinigungsdüsen umfassen, die Fluid gegen das Band düsen, so daß dieses von der Sauberseite zur Schmutzseite hin vom Fluid durchströmt wird. Ferner kann eine Ultraschall-Reinigungsvorrichtung vorgesehen sein.

Bei einem vorteilhaften Ausführungsbeispiel der Erfindung ist in Austragrichtung gesehen vor der Wickelwalze eine Umlenkeinrichtung, insbesondere Umlenkwalze, angeordnet. Zwischen der Umlenkwalze und der Aufwickelwalze ist dann die Reinigungsvorrichtung und darunter eine Auffangeinrichtung für Feststoffe und/oder ablaufende, verschmutzte Reinigungsflüssigkeit vorgesehen. Bei geschickter räumlicher Anordnung der Umlenk- und Wickelwalzen kann das Fluid zum Reinigen des Bandes nicht nur von der Sauberseite zur Schmutzseite hin durch das Band geführt bzw. gespritzt werden. Vielmehr wird es einwärts gerichtet, so daß das Fluid anschließend bei wenig Raumbedarf einfach aufgefangen werden kann. Der Auffangraum für die verschmutzte Bandspülflüssigkeit kann gleichzeitig auch als Sicherheitsüberlauf für die in der Filtermulde befindliche Schmutzflüssigkeit dienen.

Vorzugsweise ist wenigstens ein Abstreifer vorgesehen, der Feststoffpartikel vor dem Aufwickeln vom Band abstreift. Seine Aufgabe ist es zu verhindern, daß am Band Filterkuchen haftenbleibt, so daß kein verschmutztes Gewebe aufgewickelt wird. In Verbindung mit der oben stehenden Reinigungsvorrichtung wird eine sehr wirksame Entfernung von Filterkuchen vom Band gewährleistet und auch aus den Bandporen etc., so daß das Band ohne jegliche Verschmutzung aufgewickelt wird und die Filtriereigenschaften auch bei Langzeitbetrieb beibehalten werden können.

Ein alternativer Aufbau der Reinigungsvorrichtung ergibt sich, wenn die Reinigungsvorrichtung in Austragrichtung gesehen vor dem Bereich angeordnet ist, bei dem der Filterkuchen das Band verläßt. Bei dieser Anordnung wird der am Band haftende Filterkuchen in den Filtrierraum zurückgeführt, wo er erneut sedimentieren kann.

Selbstverständlich arbeitet die Reinigungseinrichtung jeweils nur auf der Seite, wo das Band aufgewickelt wird, damit ein Austrocknen der Restverschmutzung im Filterband vermieden werden kann.

Der bereits erwähnte Abstreifer ist vorzugsweise selbst nachstellend ausgebildet, was z.B. durch sein Gewicht erreicht werden kann. Auf diese Weise kann sein Wirkungsgrad auch bei benutzungsbedingtem Verschleiß etwa gleichbleibend sein.

Vorzugsweise wird vorgesehen, daß der Abstreifer beim Rückwärtslauf des Filterbandes vom Filterband entfernbar ist. Auf diese Weise wird vermieden, daß am Filterband anhaftende Restflüssigkeit ausgetragen wird. Zur Entfernung des Abstreifers kann dieser z.B. anhebbar oder verschwenkbar ausgeführt sein.

Zur automatischen Reinigung der Mitnehmer ist eine sich oberhalb von diesen über im wesentichen deren gesamte Länge erstreckende Verteilereinrichung für Reinigungsflüssigkeit vorgesehen. Die Reinigungsflüssigkeit ist beispielsweise in einer Wanne unterhalb des Filtrierraums angeordnet und wird durch eine Pumpe zu der Verteilereinrichtung heraufgepumpt.

In die Wanne kann auch Leckflüssigkeit aus dem Filtrierraum und überlaufende verunreinigte Flüssigkeit abgeführt werden.

Vorzugsweise sind Einrichtungen für den Austrag des Filterkuchens beidseits des Filtrierraums vorgesehen. Auf diese Weise befindet sich die erfindungsgemäße Vorrichtung bei beiden Bandantriebsrichtungen stets im Filtrierbetrieb, so daß es zu keiner Totzeit kommt. In diesem Fall sind die Bandantriebsgeschwindigkeiten in beiden Richtungen gleich und wie erwähnt die Mitnehmer für den Zweirichtungsbetrieb ausgelegt. Sie unterstützen dann den ausgetragenen Filterkuchen in der jeweiligen Austragsrichtung und verhindern, daß dieser wieder zurück in den Filtrierraum rutscht.

Bei nur auf einer Seite der Vorrichtung vorgesehenem Austrag kann es gegebenenfalls zweckmäßig sein, den Bandlauf in der Austragrichtung mit anderer Geschwindigkeit als in der entgegengesetzten Richtung vorzusehen. So könnte der Rücklauf des voll aufgewickelten Bandes beispielsweise schneller sein. Dies hängt jedoch von der Art der Flüssigkeit und der Feststoffpartikel, deren Körnigkeit, etc. ab.

Die erfindungsgemäße Vorrichtung kann bei den verschiedensten Anordnungen eingesetzt werden, bei denen feine und grobe Feststoffverunreinigungen von Flüssigkeiten getrennt werden sollen. Sie kann beispielsweise lediglich den Boden eines Filtrierraums begrenzen, sie kann auch zumindest teilweise zwei Seiten eines Filtrierraums begrenzen, wobei entsprechende Abdichtungseinrichtungen vorgesehen sein müssen.

Des weiteren kann die Vorrichtung auch ähnlich wie bei dem eingangs erwähnten Schwerkraftbandfilter eingesetzt werden. Dann ist der Filtrierraum seitlich durch zwei abgedichtet angeordnete, umlaufende Seitenscheiben begrenzt.

Vorzugsweise sind die starr miteinander verbundenen Seitenscheiben in Tänzerkonstruktion angeordnet, d.h. sie liegen frei auf dem Band auf, wobei ihr Eigengewicht allein schon ausreichend ist, um eine genügende Abdichtung vorzusehen (vgl. JP-A-49 85668). Bei Verschmutzung kann es sich unter Umständen ergeben, daß die Seitenscheiben seitlich ausweichen, ohne daß es zu einer Blockierung kommt. Dies beeinträchtigt jedoch die Dichtigkeit nicht. Auch ist bei der erfindungsgemäßen Bandanordnung die sich durch die Tänzerkonstruktion ergebende Vorspannkraft völlig ausreichend. Eine Kontrolle der Bandspannung und die sich so ergebende Nachspannung des Filterbandes entfallen.

Vorzugsweise sind bei der Seitenscheibenanordnung mit Tänzerkonstruktion die Mitnehmer leistenartig und zwischen den Seitenscheiben um ihre Achsen beweglich aufgehängt.

Gemäß einem bevorzugten Ausführungsbeispiel der Erfindung sind die Mitnehmer leistenartig mit Zylinderform und um ihre Längsachse drehbar. Auf diese Weise können die Mitnehmer an dem Filtrierband abrollen. Es ergibt sich eine Unterstützung des Austrags beim Verlassen der Filtermulde.

Vorteilhaft sind die Mitnehmer durch eine radiale Vorspannung beaufschlagt, die sie gegen das Filtrierband andrückt. Dies kann z.B. dadurch ermöglicht sein, daß die Mitnehmer seitlich an Armen gelagert sind und die Arme am entgegengesetzten Ende mittels Druckfedern mit der Vorspannung beaufschlagt sind.

Ferner kann unterhalb des Filtrierraums eine Einrichtung zum Sammeln und Abfuhren des Filtrats angeordnet sein.

Die Zuführung der zu trennenden Fest/Flüssigkeit-Mischung erfolgt bei der erfindungsgemäßen Trenn- und Filtriervorrichtung beispielsweise etwa in mittlerer Höhe, z.B. durch eine Hohlachse. Alternativ kann jedoch eine Zuführung von oben vorgesehen sein. Dies ist jeweils durch die konstruktiven Gegebenheiten der Gesamtanordnung bedingt oder kann auch aufgrund weiterer Gegegebenheiten jeweils gewählt werden.

So kann die zu trennende Fest/Flüssig-Mischung zur Erzielung günstiger Strömungsverhältnisse im Filtrierraum vorzugsweise über einen seitlichen Zulauf zugeführt werden. Es kommt so nicht zu Anlagerungen im Bereich der Seitenbegrenzung des Filtrierraums. Zweckmäßig erfolgt die seitliche Zuführung auf beiden Seiten.

Die erfindungsgemäße Trenn- und Filtriervorrichtung ist sehr einfach aufgebaut und besteht aus wenigen Teilen. Dementsprechend kann sie sehr flexibel in bestehende Anlagen eingebaut werden. Während sie sich in einfacher Ausgestaltung insbesondere zur Grobreinigung eignet, kann sie insbesondere auch bei der dem Abstreifer nachgeordneten Reinigungsvorrichtung zur Feinfiltration eingesetzt werden. Weiterhin sehr vorteilhaft sind ihr geringer Raumbedarf und der sehr geringe Wartungsaufwand aufgrund der Sicherheitsvorrichtungen gegen Verschmutzungen.

Die Erfindung ist im folgenden weiter anhand der nachfolgenden Beschreibung eines bevorzugten Ausführungsbeispiels und der Zeichnung beschrieben. Das Ausführungsbeispiel dient lediglich zu Erläuterungszwecken und ist als nicht einschränkend anzusehen. In der Zeichnung zeigen:
- Fig. 1: eine schematische Seitenansicht eine Ausführungsbeispiels, wobei der Filtrierraum seitlich durch zwei Seitenscheiben begrenzt ist,
- Fig. 2: eine Teilansicht des Ausführungsbeispiels mit einer anders ausgestatteten Reinigungsvorrichtung, bei der der Filterkuchen vom Band außerhalb des Filtrierraums in eine dazu vorgesehene Auffangvorrichtung befördert wird, und
- Fig. 3: eine Schnittansicht einer Lagerung zum Haltern einer Mitnehmerleiste, unter Vorspannung.

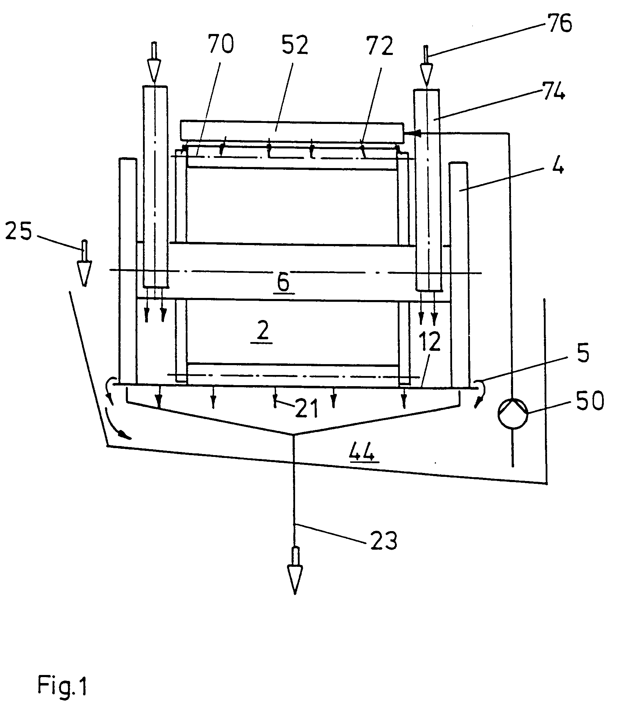

Die in Fig. 1 dargestellte Trenn- und Filtriervorrichtung umfaßt einen muldenförmigen Filtrierraum 2, der auf der Unterseite durch ein Filterband 12 begrenzt ist. Seitlich ist der Filtrierraum 2 durch Seitenscheiben begrenzt. Die Seitenscheiben 4 sind in Tänzerkonstruktion gelagert, d.h. sie liegen im wesentlichen frei auf dem Band 12 auf, wodurch Wartungs- und Montagearbeiten am Band wesentlich erleichtert sind. Das Gewicht der Seitenscheiben 4 gewährleistet eine ausreichende Stabilität und Abdichtung, so daß sich ein abdichtender Eingriff der Seitenscheiben 4 mit dem Band 12 ergibt und Flüssigkeit aus dem Filtrierraum seitlich nicht entweichen kann. Die beiden Seitenscheiben 4 sind über ein geschlossenes Rohr 6 starr miteinander verbunden, das durch sein Gewicht mit zur Abdichtung beiträgt.

Das Band 12 ist im dargestellten Ausführungsbeispiel aus einem metallischen korrosionsfesten Gittergeflecht bzw. -gewebe, vorzugsweise aus Edelstahl. Es ist mit seinen Enden jeweils bei 14 bzw. 16 an einer Wickelwalze 18 bzw. 20 befestigt. Die beiden Wickelwalzen 18, 20 sind gleichsinnig antreibbar. Gewöhnlich arbeitet die Aufwickelwalze, bis das Band 12 so weit möglich auf ihr aufgewickelt ist und anschließend erfolgt der Bandvorschub in umgekehrter Richtung. Ein Leitblech bzw. eine Auffangeinrichtung zum Sammeln und Abführen des Filtrats bzw. als Spritzschutz ist bei 22 und der Abfluß und die Weiterleitung des Filtrats durch die Pfeile 21, 23 angedeutet.

Zur Wanne 44 ist auch eine Zuführung von verschmutzter Reinigungsflüssigkeit für die nachfolgend noch beschriebenen Mitnehmer 70 sowie eventuell aus der Auffangeinrichtung 22 überlaufendes Filtrat vorgesehen und mittels des Pfeils 25 angedeutet. Eine in der Wanne 44 angeordnete Pumpe 50 fördert dort befindliche Reinigungsflüssigkeit nach oben, wo diese über Leitungen einer Verteilereinrichtung 52 zugeführt wird. Die Verteilereinrichtung 52 erstreckt sich axial über im wesentlichen die gesamte Längserstreckung der Mitnehmer 70 oberhalb von diesen. Die Reinigungsflüssigkeit tritt nach unten (vgl. Pfeile 72) aus und spült so die Mitnehmer 70 frei von noch haftenden Feststoffpartikeln. Diese gelangen in den Filtrierraum 2, wo sie in den Filtervorgang einbezogen werden.

Das Band 12 ist breiter als der Abstand der beiden Seitenscheiben 4 voneinander ausgeführt. Dies unterstützt die Abdichtung. Kommt es dennoch zu irgendwelchen Undichtigkeiten (vgl. Pfeile 5), so fließt allenfalls Flüssigkeit in die Wanne 4 und wird anschließend durch die Pumpe 50 über die Verteilereinrichtung 52 wieder in den Filtrierraum 2 zurückgepumpt.

Seitlich von den Mitnehmern 70 befinden sich zwei radial nach unten gerichtete Zuleitungsrohre 74 für die zu trennende Fest/Flüssigkeit-Mischung. Deren Zulauf ist durch Pfeile 76 angedeutet. Durch die seitliche Einspülung kommt es nicht zu störenden seitlichen Sedimentationen der Feststoffpartikel.

Im Filtrierraum 2 sind Mitnehmereinrichtungen 70 angeordnet, die im dargestellten Ausführungsbeispiel leistenartig ausgeführt sind. Sie bewegen sich gleichzeitig mit dem Band 12 und unterstützen in bekannter Weise den Austrag des mit dem Band 12 entsprechend dessen Antrieb ausgetragenen Filterkuchens, insbesondere bei höhergelegter Austragshöhe. Sie erleichtern das Überführen auf den horizontalen Bereich des Bandes 12 bei der Umlenkwalze 18 bzw. 20.

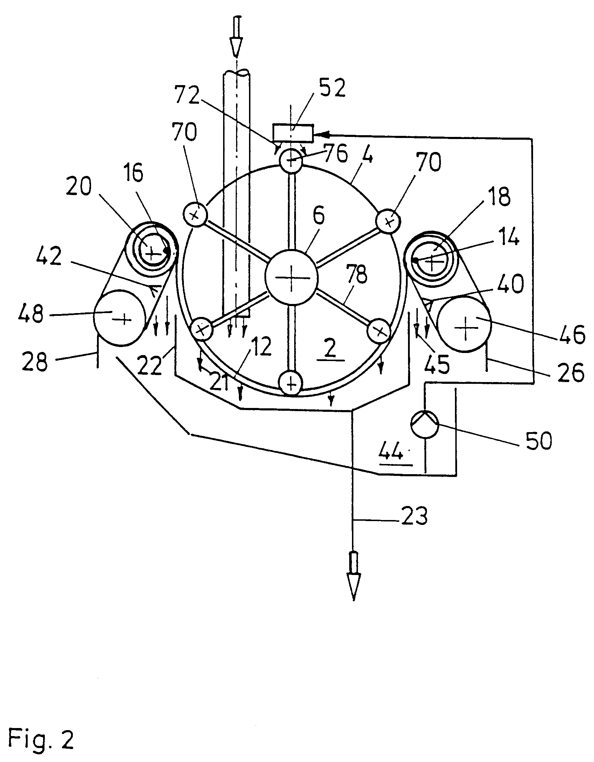

Wie Fig. 2 zeigt, werden die noch am Band 12 haftenden Feststoffpartikel nicht in den Filtrierraum 2 zurücktransportiert, sondern in eine hierzu speziell vorgesehene Auffangeinrichtung 44 befördert, bei der es sich z.B. um eine Wanne handelt. Bei dieser Anordnung ist vom Filtrierraum 2 fort unter der Wickelwalze 18 bzw. 20 jeweils eine Umlenkwalze 46, 48 vorgesehen. Am unteren Umfangsende der Umlenkwalze 46 bzw. 48 ist jeweils eine Abstreifeinrichtung 26, 28 angeordnet, die das Band 12 auf der Schmutzseite von noch haftengebliebenem Filterkuchen befreit.

Zwischen der Wickelwalze 18, 20 und der Umlenkwalze 46, 48 ist jeweils eine Reinigungsvorrichtung 40, 42 angeordnet. Sie spritzt Reinigungsflüssigkeit von der Reinseite zur Schmutzseite auf das Band und drückt so nicht abgestreifte Feststoffpartikel aus dem Band heraus. Auf diese Weise ist sichergestellt, daß das Band 12 vollkommen gereinigt auf der Wickelwalze 18, 20 aufgewickelt wird. Bei Einsatz einer so angeordneten Reinigungsvorrichtung kann ein Filterband für eine hohe Filterfeinheit eingesetzt werden. Die Reinigungsflüssigkeit wird nach dem Reinigungsvorgang wieder in der Wanne 44 aufgefangen, wie die Pfeile 45 verdeutlichen.

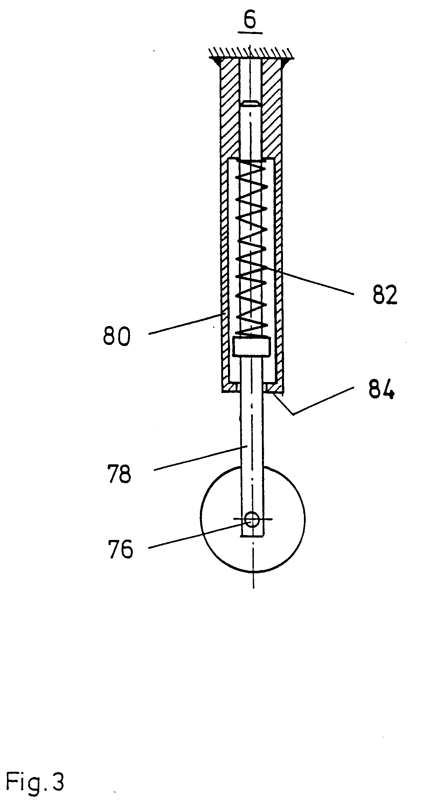

Die Mitnehmerleisten 70 sind für den Zweirichtungsbetrieb sowie für die Übergabe bei den Aufwickelwalzen 18 bzw. 20 um eine Achse 76 drehbar. Seitlich sind die Achsen der Mitnehmer 70 an Armen 78 gehaltert. Die Arme 78 sind wiederum an dem Rohr 6 befestigt. Beim dargestellten Ausführungsbeispiel sind die Mitnehmerleisten 70 vorgespannt. Zu diesem Zweck befinden sich die axial inneren Enden der Arme 78 in Hülsen 80 angeordnet, wie in Fig. 3 gezeigt ist. Druckfedern 82 drücken die Arme 78 nach unten, wobei eine Rückhalteeinrichtung durch einen Kragen 84 der Hülse vorgesehen ist. Selbstverständlich können auch andere Mittel zur Vorspannung verwendet werden.

Die eingesetzten Mitnehmerleisten 70 eignen sich besonders gut für den Einsatz in einem verhältnismäßig hohen und steilwandigen Filtrierraum. Sie sind so ausgebildet, daß sie am Band 12 von Muldenbeginn bis zur Höhe der Bandabwicklung in die schräge Richtung Kuchenaustrag bzw. Schlammabfuhr selbsthaltend anliegen.

Die Funktion der erfindungsgemäßen Trenn- und Filtriervorrichtung ist, abgesehen von der anderen Bandanordnung, wie bei der eingangs erwähnten EP-B-0 347 445. Der Bandantrieb ist somit jedenfalls in der Austragrichtung intermittierend, wobei der Startpunkt abhängig vom Flüssigkeitspegel oder Feststoffanfall im Filtrierraum gesteuert ist.

Vorstehend ist die Erfindung anhand bevorzugter Ausführungsbeispiele und ausgewählter Merkmale beschrieben und dargestellt worden. Selbstverständlich ist sie nicht auf diese Darstellung und die angegebenen Zahlenwerte beschränkt.

## Patentansprüche

1. Trenn- und Filtriervorrichtung zur Fest/Flüssigtrennung, insbesondere mit Schwerkraftfilterung, umfassend
einen Filtrierraum (2), der eine über eine Zuführung zugeführte, zu trennende Fest/Flüssig-Mischung enthält,
ein zwei Enden aufweisendes, vor- und zurücklaufendes Filterband (12), das für Flüssigkeiten permeabel und für Feststoffpartikel im wesentlichen impermeabel ist und die untere Begrenzung des Filtrierraums (2) bildet, wobei das Filtrat unterhalb des Filterbandes abgeführt wird,
Mitnehmereinrichtungen (70), die sich gleichzeitig mit dem Filterband bewegen und das Austragen von Filterkuchen mittels des Filterbandes aus dem Filtrierraum (2) unterstützen, wobei eine Einrichtung für den Austrag des Filterkuchens auf einer Seite des Filtrierraums vorgesehen ist, und
eine Reinigungsvorrichtung (42) für das Filterband (12), die sich außerhalb des Filtrierraums und hinter der Filterkuchenaustragstelle befindet.

2. Vorrichtung nach Anspruch 1, dadurch **gekennzeichnet,** daß die Enden des Filterbandes (12) jeweils an einer Wickelwalze (18, 20) befestigt sind.

3. Vorrichtung nach Anspruch 1 oder 2, dadurch **gekennzeichnet,** daß je eine Reinigungsvorrichtung (40, 42) beidseitig des Filtrierraums (2) vorgesehen ist.

4. Vorrichtung nach einem der Ansprüche 1 bis 3, dadurch **gekennzeichnet,** daß in Austragrichtung gesehen hinter der Wickelwalze (18, 20 ) eine Umlenkeinrichtung (46, 48), insbesondere Umlenkwalze, angeordnet ist und zwischen Umlenkwalze (46, 48) und Wickelwalze (18, 20) die Reinigungsvorrichtung (40, 42) vorgesehen ist, die das Filterband (12) mit Fluid von der Sauberseite zur Schmutzseite hin durchströmt, wobei darunter eine Auffangeinrichtung (44) für Feststoffe und/oder ablaufende, verschmutzte Reinigungsflüssigkeit vorgesehen ist.

5. Vorrichtung nach Anspruch 4, dadurch **gekennzeichnet,** daß die Umlenkwalze (46, 48) unterhalb der Wickelwalze (18, 20) und in bezug auf den Filtrierraum (2) nach außen versetzt angeordnet ist.

6. Vorrichtung nach einem der Ansprüche 1 bis 5, dadurch **gekennzeichnet,** daß wenigstens ein insbesondere selbstnachstellender, Abstreifer (26, 28) vorgesehen ist, der Feststoffpartikel vor dem Aufwickeln vom Filterband (12) abstreift.

7. Vorrichtung nach Anspruch 6, dadurch **gekennzeichnet,** daß der Abstreifer beim Rückwärtslauf des Filterbandes vom Filterband entfernbar ist.

8. Vorrichtung nach einem der Ansprüche 1 bis 7, dadurch **gekennzeichnet,** daß ein seitlicher Zulauf (74) für die zu trennende Fest/Flüssig-Mischung vorgesehen ist.

9. Vorrichtung nach einem der Ansprüche 1 bis 8, **gekennzeichnet** durch eine Reinigungsvorrichtung (52) für die Mitnehmereinrichtungen (70).

10. Vorrichtung nach Anspruch 9, dadurch **gekennzeichnet,** daß eine sich oberhalb der Mitnehmer (70) über im wesentlichen deren Länge erstreckende Verteilereinrichtung (52) für das Spülen der Mitnehmer mit Bandspülflüssigkeit vorgesehen ist.

11. Vorr**i**chtung nach Anspruch 10, dadurch **gekennzeichnet,** daß eine Wanne (44) unterhalb des Filtrierraums (2), die mit verschmutzter Reinigungsflüssigkeit für die Mitnehmer (70) gespeist wird sowie eine Pumpe (50), die Reinigungsflüssigkeit zur Verteilereinrichtung (52) pumpt, vorgesehen sind.

12. Vorrichtung nach Anspruch 11, dadurch **gekennzeichnet,** daß eine Rückführung von Leckflüssigkeit (5) aus dem Filtrierraum und/oder überlaufendes Filtrat (25) in die Wanne vorgesehen ist.

13. Vorrichtung nach einem der Ansprüche 1 bis 12, dadurch **gekennzeichnet,** daß die Einrichtung für den Austrag des Filterkuchens auf einer Seite des Filtrierraums Mitnehmer (70) umfaßt.

14. Vorrichtung nach einem der Ansprüche 1 bis 13, dadurch **gekennzeichnet,** daß Einrichtungen für den Austrag des Filterkuchens beidseits des Filtrierraums vorgesehen sind.

15. Vorrichtung nach Anspruch 14, dadurch **gekennzeichnet,** daß der Filterbandlauf entgegen der Austragrichtung mit anderer Geschwindigkeit als in Austragrichtung erfolgt.

16. Vorrichtung nach einem der Ansprüche 1 bis 15, dadurch **gekennzeichnet,** daß der Filtrierraum (2) seitlich durch zwei abgedichtet angeordnete, umlaufende Seitenscheiben (4) begrenzt ist, die in Tänzerkonstruktion angeordnet sind.

17. Vorrichtung nach Anspruch 16, dadurch **gekennzeichnet,** daß die Mitnehmer leistenartig und zwischen den Seitenscheiben um ihre Achse beweglich aufgehängt sind.

18. Vorrichtung nach einem der Ansprüche 1 bis 16, dadurch **gekennzeichnet,** daß die Mitnehmer (70) leistenartig mit Zylinderform sind und um ihre Längsachse (76) drehbar sind.

19. Vorrichtung nach einem der Ansprüche 1 bis 18, dadurch **gekennzeichnet,** daß die Mitnehmer (70) durch Vorspannung beaufschlagt am Filterband (12) anliegen.

20. Vorrichtung nach Anspruch 19, dadurch **gekennzeichnet,** daß die Mitnehmer (70) seitlich an axialen Armen (78) gelagert sind, wobei die Arme axial entgegengesetzt mit der Vorspannung beaufschlagt sind.

21. Vorrichtung nach einem der Ansprüche 1 bis 20, dadurch **gezeichnet,** daß unterhalb des Filtrierraums eine Auffangeinrichtung zum Sammeln und Abführen des Filtrats angeordnet ist.

## Claims

1. Separation and filtration apparatus for solid/liquid separation, particularly with gravitational filtration, comprising
a filtration chamber (2) which contains a solid/liquid mixture which is to be separated and which is input to the chamber via a feeder,
a filter band (12) having two ends and arranged to run forwards and backwards, the band being permeable to liquids and substantially impermeable to solid particles and defining the lower limit of the filtration chamber (2), with the filtrate being taken away from below the filter band,
entraining devices (70) which move simultaneously with the filter band and aid the removal of filter cake by means of the filter band from the filtration chamber (2), with a device for the removal of the filter cake being provided on one side of the filtration chamber, and
a cleaning device (42) for the filter band (12), which is located outside the filtration chamber and after the filter cake removal position.

2. Apparatus according to claim 1, characterised in that the ends of the filter band (12) are each fixed to respective winding rollers (18, 20).

3. Apparatus according to claim 1 or 2, characterised in that a respective cleaning device (40, 42) is provided on each side of the filtration chamber (2).

4. Apparatus according to one of claims 1 to 3, characterised in that a deflection device (46, 48), particularly deflection rollers, is arranged after the winding rollers (18, 20) viewed in the removal direction, and the cleaning device (40, 42) is provided between deflection rollers (46, 48) and winding rollers (18, 20), the cleaning device being effective to cause the flow of fluid through the filter band (12) from the clean side towards the dirty side, with a collection device (44) for solids and/or contaminated run-off cleaning liquid being provided below the cleaning device.

5. Apparatus according to claim 4, characterised in that the deflection rollers (46, 48) are arranged below the winding rollers (18, 20) and in relation to the filtration chamber (2) are outwardly offset from the winding rollers.

6. Apparatus according to one of claims 1 to 5, characterised in that at least one stripper (26, 28), particularly a self-adjusting stripper, is provided which strips off solid particles before the winding up of the filter band (12).

7. Apparatus according to claim 6, characterised in that the stripper is removable from the filter band for the reverse running of the filter band.

8. Apparatus according to one of claims 1 to 7, characterised in that a lateral feeder (74) is provided for the supply of the solid/liquid mixture to be separated.

9. Apparatus according to one of claims 1 to 8, characterised by a cleaning device (52) for the entraining devices (70).

10. Apparatus according to claim 9, characterised in that a distribution device (52) for the flushing of the entrainers with band flushing liquid is provided extending above the entrainers (70) over substantially their full length.

11. Apparatus according to claim 10, characterised in that a trough (44) is provided below the filtration chamber (2), which is fed with contaminated cleaning liquid for the entrainers (70), as well as a pump (50) which pumps the cleaning liquid to the distribution device (52).

12. Apparatus according to claim 11, characterised in that a return path is provided for leakage liquid (5) from the filtration chamber and/or overflowing filtrate (25) into the trough.

13. Apparatus according to one of claims 1 to 12, characterised in that the device for the removal of the filter cake on one side of the filtration chamber includes entrainer (70).

14. Apparatus according to one of claims 1 to 13, characterised in that devices are provided for the removal of the filter cake on both sides of the filtration chamber.

15. Apparatus according to claim 14, characterised in that the travel of the filter band contrary to the removal direction is carried out at a different speed as compared with travel in the removal direction.

16. Apparatus according to one of claims 1 to 15, characterised in that the filtration chamber (2) is defined laterally by two rotating side plates (4) which are sealed off and which are arranged in a dancer construction.

17. Apparatus according to claim 16, characterised in that the entrainers are of strip form and are suspended for movement about their axes between the side plates.

18. Apparatus according to one of claims 1 to 16, characterised in that the entrainers (70) are strip-like cylinders and are rotatable about their longitudinal axes (76).

19. Apparatus according to one of claims 1 to 18, characterised in that the entrainers (70) are biased into contact with the filter band (12).

20. Apparatus according to claim 19, characterised in that the entrainers (70) are mounted at the sides on axial arms (78), with the arms being biased axially in opposite directions.

21. Apparatus according to one of claims 1 to 20, characterised in that below the filtration chamber is arranged a collection device for the collection and removal of the filtrate.

## Revendications

1. Dispositif de séparation et de filtration pour la séparation solide/liquide, notamment à filtration par gravité, comprenant
une chambre de filtration (2) qui contient un mélange solide/liquide à séparer, introduit par une entrée,
une bande filtrante (12) comportant deux extrémités, animée d'un mouvement d'avance et de recul, qui est perméable au liquide et essentiellement imperméable aux particules solides et forme la limitation inférieure de la chambre de filtration (2), le filtrat étant évacué en-dessous de la bande filtrante,
des dispositifs entraîneurs (70) qui se déplacent en même temps que la bande filtrante et aident au transport du gâteau de filtration hors de la chambre de filtration (2) au moyen de la bande filtrante, un dispositif pour le déchargement du gâteau de filtration étant prévu d'un côté de la chambre de filtration et
un dispositif de nettoyage (42) de la bande filtrante (12) qui se trouve en dehors de la chambre de filtration, après le point de déchargement du gâteau de filtration.

2. Dispositif selon la revendication 1, caractérisé par le fait que les extrémités de la bande filtrante (12) sont fixées chacune à un cylindre d'enroulement (18, 20).

3. Dispositif selon la revendication 1 ou 2, caractérisé par le fait qu'un dispositif de nettoyage (40, 42) est prévu de chaque côté de la chambre de filtration (2).

4. Dispositif selon une des revendications 1 à 3, caractérisé par le fait qu'un dispositif de déviation (46, 48), notamment un cylindre de déviation, est disposé derrière le cylindre d'enroulement (18, 20), vu dans la direction de déchargement, et que le dispositif de nettoyage (40, 42) est prévu entre le cylindre de déviation (46, 48) et le cylindre d'enroulement (18, 20), lequel dispositif de nettoyage envoie du fluide sur la bande filtrante (12), du côté propre vers le côté pollué, un dispositif de réception (44) pour les solides et/ou le liquide de nettoyage pollué étant prévu en-dessous.

5. Dispositif selon la revendication 4, caractérisé par le fait que le cylindre de déviation (46, 48) est disposé en-dessous du cylindre d'enroulement (18, 20) et est décalé en direction de l'extérieur par rapport à la chambre de filtration (2).

6. Dispositif selon une des revendication 1 à 5, caractérisé par le fait qu'il est prévu au moins un racleur (26, 28), notamment un racleur à réglage automatique, qui élimine les particules solides de la bande filtrante (12) avant l'enroulement .

7. Dispositif selon la revendication 6, caractérisé par le fait que le racleur peut être éloigné de la bande filtrante lors du retour en arrière de celle-ci.

8. Dispositif selon une des revendications 1 à 7, caractérisé par le fait qu'une entrée latérale (74) est prévue pour le mélange solide/liquide à séparer.

9. Dispositif selon une des revendications 1 à 8, caractérisé par un dispositif de nettoyage (52) pour les dispositifis entraîneurs (70).

10. Dispositif selon la revendication 9, caractérisé par le fait qu'il est prévu au-dessus des entraineurs (52), sensiblement sur toute la longueur de ceux-ci, un dispositif de distribution (52) pour le lavage des entraîneurs (70) avec du liquide de lavage de la bande filtrante.

11. Dispositif selon la revendication 10, caractérisé par le fait qu'il est prévu, en-dessous de la chambre de filtration (2), un bac (44) qui est alimenté en liquide de nettoyage pollué pour les entraîneurs (70) ainsi qu'une pompe (50) qui pompe le liquide de nettoyage en direction du dispositif de distribution (52).

12. Dispositif selon la revendication 11, caractérisé par le fait qu'un retour de liquide de fuite (5) de la chambre de filtration et/ou des trop pleins de filtrat (25) dans le bac est prévu.

13. Dispositif selon une des revendications 1 à 12, caractérisé par le fait que le dispositif pour le déchargement du gâteau de filtration, d'un côté de la chambre de filtration, comprend des entraîneurs (70).

14. Dispositif selon une des revendications 1 à 13, caractérisé, par le fait que des dispositifs pour le déchargement du gâteau de filtration sont prévus de part et d'autre de la chambre de filtration .

15. Dispositif selon la revendication 14, caractérisé par le fait que le défilement de la bande filtrante dans la direction opposée au déchargement a lieu à une vitesse différente du défilement dans la direction de déchargement.

16. Dispositif selon une des revendications 1 à 15, caractérisé par le fait que la chambre de filtration (2) est délimitée sur les côtés par deux disques latéraux (4) tournants, montés étanches, qui sont montés dansants.

17. Dispositif selon la revendication 16, caractérisé par le fait que les entraîneurs (70) ont une forme de règles et sont suspendus mobiles autour de leur axe entre les disques latéraux.

18. Dispositif selon une des revendications 1 à 16, caractérisé par le fait que les entraîneurs (70) ont une forme de règles cylindriques et sont montés tournants autour de leur axe longitudinal (76).

19. Dispositif selon une des revendications 1 à 18, caractérisé par le fait que les entraîneurs (70) sont appliqués avec précontrainte sur la bande filtrante (12).

20. Dispositif selon la revendication 19, caractérisé par le fait que les entraîneurs (70) sont montés latéralement sur des bras (78) axiaux, les bras étant soumis à la précontrainte dans des directions axiales opposées.

21. Dispositif selon une des revendications 1 à 20, caractérisé par le fait qu'un dispositif récepteur est disposé sous la chambre de filtration pour recueillir et évacuer le filtrat.
